# EUROPEAN PATENT SPECIFICATION

(11) **EP 1 884 153 B1**
(45) Date of publication and mention of the grant of the patent: **17.03.2010**
(21) Application number: 07113006.6
(22) Date of filing: 24.07.2007
(51) Int. Cl.: A01D 34/82

(54) **Articulated joint for lawnmower handlebar**
Gelenkverbindung für einen Rasenmäher-Lenkgriff
Joint articulé pour mancheron d'une tondeuse à gazon

(30) Priority: 02.08.2006 IT MI20060282 U
(43) Date of publication of application: 06.02.2008
(73) Proprietor: GGP Italy S.p.A., 31033 Castelfranco Veneto (TV) (IT)
(72) Inventor: Tosato, Pierluigi, 37128, VERONA (IT)
(74) Representative: Mittler, Enrico

(56) References cited:
- WO-A-2004/052710
- GB-A- 2 380 520
- US-A- 5 358 352

## Description

The present invention concerns an articulated joint for a lawnmower handlebar.

Lawnmowers are known having a grip solidly connected to a supporting bar frame pivoting on the body of a machine comprising wheels, a motor and a cutting blade.

Said handlebar usually supports a control lever for a cable which cuts out the motor.

When said lever is in the relaxed position the motor cutout is active.

When the operator pulls or pushes the lever, the motor cutout is deactivated and the lawnmower can start.

The motor cutout cable must be kept in traction and it is connected to the machine body by means of a transmission located on the supporting frame towards the machine body, and at all events not in the vicinity of the handlebar grip.

If the operator wants to vary the height of the handlebar grip, he/she must also rotate the supporting frame using the fulcrum located in proximity to the machine body, in other words, rotate the entire supporting frame together with the handlebar grip.

Lawnmower handlebars are known which pivot on the supporting frame.

A further fulcrum can be provided for lawnmowers in proximity to the transmission for the motor cutout cable, which however is located further down than the grip, in other words towards the machine body. The usefulness of said further fulcrum would be very limited.

WO-2004/052710 shows an articulated joint.

The object of the present invention is to create a lawnmower handlebar with a motor cutout cable controllable by means located in proximity to the grip, whose ergonomics are adjustable independently of the supporting frame.

In accordance with the invention this object is achieved with an articulated joint for a lawnmower handlebar as disclosed in claim 1.

The articulated joint functions as a further fulcrum located in the vicinity of the operator's grip.

Said articulated joint allows a better adjustment of the ergonomics of the handlebar grip and enables the limiting of the size of the motor cutout cable which runs as far as a transmission integral with the supporting frame.

These and other characteristics of the present invention will be made more clearly evident from the following detailed description of an example of its practical embodiment which is illustrated without limiting effect in the attached drawings, in which:
figure 1 shows a top plan view of the lawnmower handlebar with a part of the supporting frame;
figure 2 shows a view in section along line II-II in figure 1, with the articulated joint on an enlarged scale;
figure 3 shows a view in section along the line III-III in figure 1 with the clamping means in the clamping position;
figure 4 shows a view in section along the line III-III in figure 1 with the clamping means in the release position;

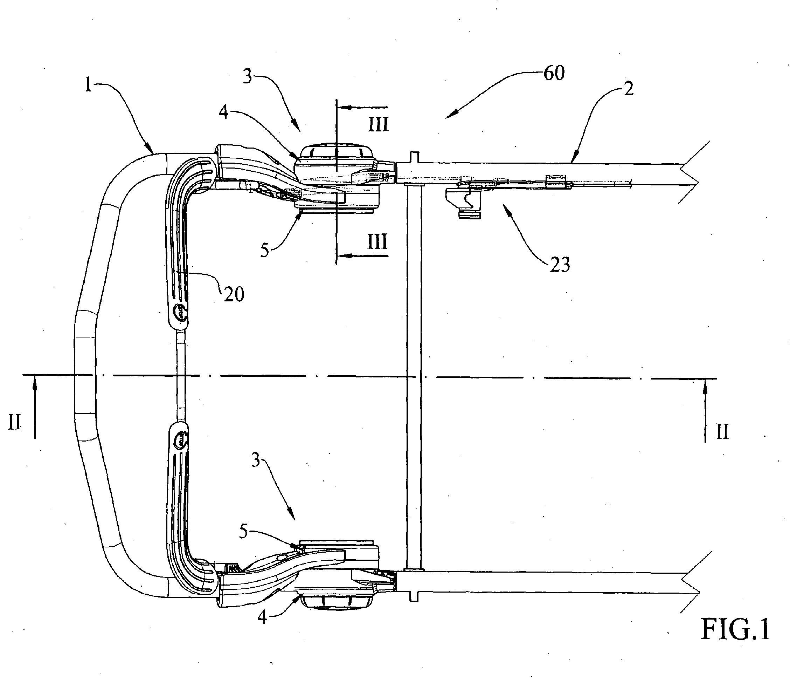

In figure 1 a lawnmower handlebar 60 is shown, comprising an adjustable grip 1 supported by a bar frame 2 by means of an articulated joint 3.

Said articulated joint 3 comprises an outer shell 4, integral with bar frame 2, couplable with an inner shell 5, integral with adjustable grip 1.

The inner shell 5 comprises a truncated cone-shaped hollow body 6 capable of having a motor cutout cable 7 wound round it, which is housed in a cavity 8 formed as a result of the coupling of said shells 4-5 and accessible through inlet/outlet openings 21-22.

Downstream from articulated joint 3, bar frame 2 supports a transmission 23 which directs the motor cutout cable 7 to the machine body (not shown).

Said motor cutout cable 7 is controlled by a handle 20 pivoted on inner shell 5.

Articulated joint 3 comprises furthermore a grooved truncated-conical junction 9 capable of engaging with toothed inner surfaces 30-31 of truncated-conical hollow body 6 and of a portion 32 of outer shell 4, which collaborates in the winding of cable 7.

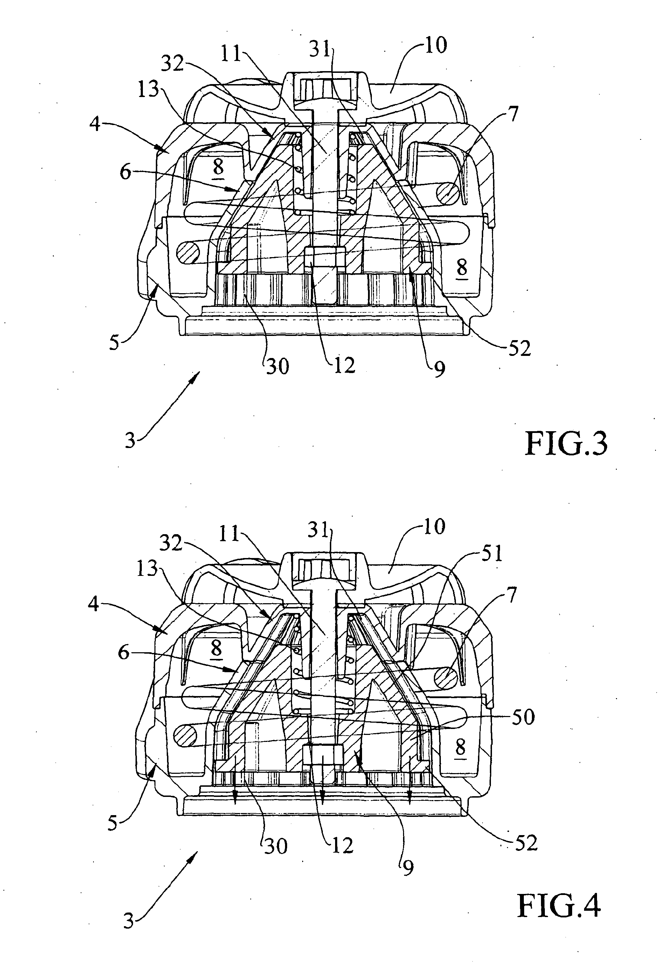

Said grooved junction 9 comprises a cylindrical connecting portion 50 between a truncated-conical portion 51 and a guide edge 52, and is movable between a position (figure 4) in which the inner shell 5, and therefore the entire handlebar grip, can rotate with respect to outer shell 4, and a clamping position (figure 3) of this reciprocal motion.

The movement of the grooved junction 9 is ensured by a knob 10 integral with a bolt 11 which engages with a nut 12; a precompressed spring 13 is also provided, which prevents jamming.

Considering initially grooved junction 9 in clamping position as in figure 3, if the operator wishes to vary the height of grip 1 without moving supporting frame 2, he/she must rotate knob 10 in such a way that bolt 11, axially stationary, induces a downwards axial movement of nut 12 (figures 3-4) followed by junction 9 because of the thrust of precompressed spring 13.

The downwards displacement of articulated joint 9 brings about the disengagement between junction 9 itself and toothed surface 31 of portion 32: inner shell 5 can now rotate with respect to outer shell 4.

The guide edge 52 allows junction 9 to rotate always integrally with inner shell 5, while truncated-conical portion 51, as a result of the displacement induced by the rotation of knob 10, disengages both with respect to surface 30 and with respect to surface 31, resulting in the possibility of the rotation of inner shell 5 with respect to outer shell 4.

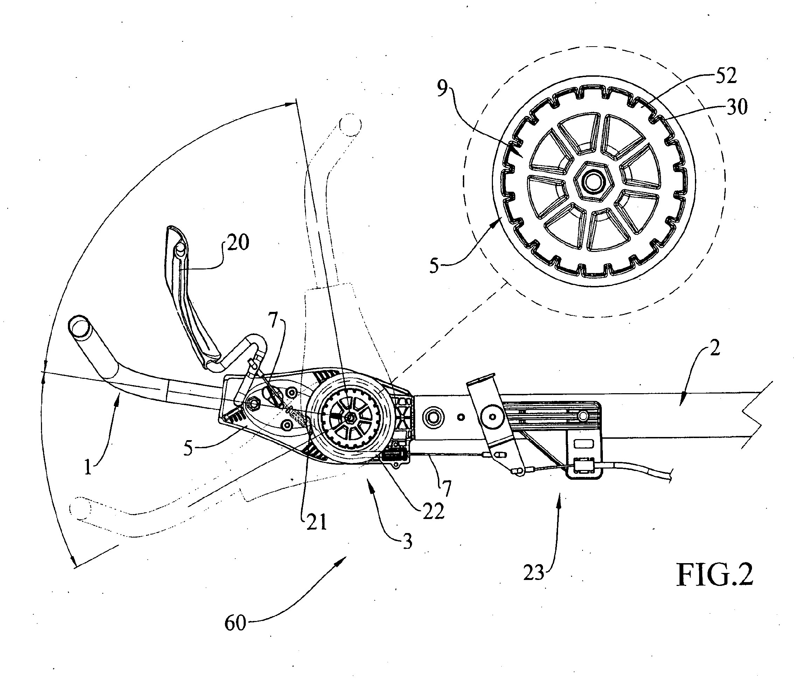

In the representation of articulated joint 3 on an enlarged scale in figure 2, the engagement may be appreciated between guide edge 52 and inner surface 30.

The rotation of inner shell 5 also brings about the rotation of handle 20 of motor cutout cable 7 which consequently is stressed (figure 2).

Winding around body 6 allows a substantially null variation to be achieved in the traction force, wound cable 7 being sufficient to compensate for the rotation of grip 1.

Articulated joint 3 is located higher than transmission 23, allowing easy adjustment of the ergonomics of grip 1 independently of supporting frame 2.

Furthermore, motor cutout cable 7 in the area of the handlebar grip goes straight into cavity 8 in the articulated joint, then runs in proximity to the supporting frame 2 as far as the transmission 23. It is unlikely for the operator or any other external object to be able to interfere accidentally with said motor cutout cable 7. The safety of the lawnmower, too, is therefore increased as a result.

## Claims

1. An articulated joint for a lawnmower handlebar, comprising a first shell (5), integral with a grip (1), couplable with a second shell (4), integral with a frame (2) supporting the grip (1),
**characterizing in that**
said first shell (5) is provided with a truncated cone-shape hollow body (6) capable of having a control cable (7) wound round it which is housed in a cavity (8) formed as a result of the coupling of said shells (4, 5) and accessible through inlet/outlet openings (21, 22),
said articulated joint (1) being also provided with a grooved junction (9) having a cylindrical portion (50) connecting a truncated-conical portion (51) and a guide edge (52), and
said grooved junction (9) is movable between a release position in which said shells (4, 5) can move with respect to each other and a mutual clamping position of said shells (4, 5) in which the truncated-conical portion (51) of the grooved junction (9) engages with toothed surfaces (30-32) of said shells (4, 5),
said reciprocal motion being provided by a knob (10) integral with a threaded bolt (11) which rotatably engages with a nut (12) controlling the displacement of the movable grooved junction (9) stressed into the release position by a precompressed spring (13) and axially guided by the guide edge (52).

## Patentansprüche

1. Gelenkverbindung für einen Rasenmäherlenker, mit einer ersten Ummantelung (5), die einstückig mit einem Griff (1) ausgebildet ist und an eine zweite Ummantelung (4) koppelbar ist, die einstückig mit einem Rahmen (2) ausgebildet ist, der den Griff (1) stützt,
**dadurch gekennzeichnet, dass**
die erste Ummantelung (5) mit einem kegelstumpfförmigen, hohlen Körper (6) versehen ist, um den ein Steuerseil (7) gewickelt werden kann, das in einem Hohlraum (8) untergebracht ist, der durch das Koppeln der Ummantelungen (4, 5) ausgebildet ist und durch Einlass/Auslass-Öffnungen (21, 22) zugänglich ist,
wobei die Gelenkverbindung (1) außerdem mit einem gerillten Kopplungsteil (9) versehen ist, das einen zylindrischen Abschnitt (50) aufweist, der einen kegelstumpfartigen Abschnitt (51) und eine Führungskante (52) verbindet, und
wobei das gerillte Kopplungsteil (9) zwischen einer gelösten Position, in der sich die Ummantelungen (4, 5) relativ zueinander bewegen können, und einer gegenseitigen Klemmposition der Ummantelungen (4, 5) bewegt werden kann, in der der kegelstumpfartige Abschnitt (51) des gerillten Kopplungsteils (9) mit gezahnten Flächen (30-32) der Ummantelungen (4, 5) in Eingriff gelangt,
wobei die Hin- und Herbewegung durch einen Knopf (10) vorgesehen wird, der einstückig mit einer Schraube (11) ausgebildet ist, die mit einer Mutter (12) in einem Dreheingriff gelangt, die die Versetzung des bewegbaren, gerillten Kopplungsteils (9) steuert, das durch eine vorkomprimierte Feder (13) in die gelöste Position gezwungen wird und durch die Führungskante (52) axial geführt wird.

## Revendications

1. Joint articulé pour un guidon d'une tondeuse à gazon, comprenant une première coque (5) solidaire d'une poignée (1), pouvant se coupler avec une seconde coque (4) solidaire d'un châssis (2) supportant la poignée (1),
**caractérisé en ce que** :
la première coque (5) est prévue avec un corps creux de forme tronconique (6) pouvant avoir un câble de commande (7) enroulé autour de celui-ci qui est logé dans une cavité (8) formée suite au couplage desdites coques (4, 5) et accessible par les ouvertures d'entrée / sortie (21, 22),
ledit joint articulé (1) étant également prévu avec une jonction rainurée (9) ayant une partie cylindrique (50) raccordant une partie tronconique (51) et un bord de guidage (52), et
ladite jonction rainurée (9) est mobile entre une position de libération dans laquelle lesdites coques (4, 5) peuvent se déplacer l'une par rapport à l'autre et une position de serrage mutuel desdites coques (4, 5) dans laquelle la partie tronconique (51) de la jonction rainurée (9) se met en prise avec des surfaces dentées (30 - 32) desdites coques (4, 5),
ledit mouvement réciproque étant fourni par un bouton (10) solidaire d'un boulon fileté (11) qui se met en prise de manière rotative avec un écrou (12) contrôlant le déplacement de la jonction rainurée (9) mobile sollicitée dans la position de libération par un ressort précomprimé (13) et guidé de manière axiale par le bord de guidage (52).
